# EUROPEAN PATENT APPLICATION

(11) **EP 4 199 552 A1**
(43) Date of publication of application: **21.06.2023**
(21) Application number: 21855595.1
(22) Date of filing: 12.08.2021
(51) Int. Cl.: H04W 4/06

(54) **STATELESS MULTICAST COMMUNICATION METHOD AND APPARATUS, STORAGE MEDIUM, TERMINAL, AND BASE STATION**

(30) Priority: 14.08.2020 CN 202010821034
(71) Applicant: Spreadtrum Semiconductor (Nanjing) Co., Ltd., Nanjing, Jiangsu 211899 (CN)
(72) Inventor: CAO, Chunyan, Shanghai 201203 (CN); LIU, Xing, Shanghai 201203 (CN)
(74) Representative: Maiwald GmbH
(86) International application number: PCT/CN2021/112216
(87) International publication number: WO 2022/033545

(57) **Abstract**

A stateless multicast communication method and apparatus, a storage medium, a terminal, and a base station. The method comprises: when there is a need to forward data, sending relay request information, wherein the relay request information is used to request assignment of relay UE for forwarding the data; receiving relay response information, wherein the relay response information comprises a relay ID of relay UE assigned to forward the data; and sending a data packet, wherein the data packet comprises the data and the relay ID. The solution of the present invention can greatly reduce the number of relay UEs conducting redundant forwarding in multicast communication involving no specific target UEs, thereby saving wireless resources.

## Description

This application claims priority to Chinese Patent Application No. 202010821034.2, titled "STATELESS MULTICAST COMMUNICATION METHOD AND APPARATUS, STORAGE MEDIUM, TERMINAL, AND BASE STATION", filed on August 14, 2020 with the China National Intellectual Property Administration, which is incorporated herein by reference in its entirety.

### FIELD

The present disclosure relates to the technical field of communication, and in particular to a stateless multicast communication method and apparatus, a storage medium, a terminal and a base station.

### BACKGROUND

In Release 12 (abbreviated as R12), Long Term Evolution (abbreviated as LTE) introduces a Proximity-based Services (abbreviated as ProSe) direct communication mechanism. User Equipment (abbreviated as UE) may communicate directly with each other via a PCS interface. The PCS interface is a direct interface between UEs. Taking two UEs as example, the two UEs are referred to as UE A and UE B.

In the research for a system architecture of ProSe direct communication, a UE-to-UE relay communication architecture is introduced, through which the UE A and the UE B, which cannot communicate directly via a PCS link, may implement a direct communication by relaying service data via other UEs (i.e. relay UEs).

Multicast communication is implemented in two communication manners under the UE-to-UE relay communication architecture, that is, a stateful multicast communication manner and a stateless multicast communication manner.

The stateful multicast communication manner refers to that multicast communication is performed with one or more explicit target UEs. In other words, when the source UE prepares to transmit a data packet, the source UE is exactly aware of the target UE where the data packet is to be sent to. As the target UE is not in a communication range of the source UE, a relay UE is required to relay the data packet. The relay UE receives the data packet from the source UE and forwards the data packet to the target UE.

The stateless multicast communication manner refers to that in multicast communication, no explicit target UE exists, but a large number of potential target UEs desires to receive communication from a relevant group. That is, the source UE is only aware that UE requests its own data in the network and is required to forward its own data packet. However, the UE does not know the target UE which the data packet is addressed to. Accordingly, a relay UE in the vicinity of the source UE receives a data packet from the source UE and forwards the data packet. One or more target UEs within the communication range of the relay UE that are interested in a data packet service of the source UE receive the data packet forwarded by the relay UE.

However, a large amount of redundant forwarding exists in the conventional stateless multicast communication process, resulting in a great waste of wireless resources.

### SUMMARY

The present disclosure solves the technical problem that how to greatly reduce the number of relay UEs redundantly forwarding in stateless communication manner under multicast communication to save wireless resources.

To solve the above technical problem, a stateless multicast communication method is provided according to an embodiment of the present disclosure. The method includes: transmitting relay request information in response to a demand for forwarding data, where the relay request information is used to request an assignment of a relay UE for forwarding the data; receiving relay response information, where the relay response information includes a relay ID of a relay UE assigned to forward the data; and transmitting a data packet, where the data packet includes the data and the relay ID.

In an embodiment, the relay request information includes mobility indication information of a source UE for transmitting the relay request information.

In an embodiment, in a case that the mobility indication information of the source UE indicates that the source UE has weak mobility, the relay UE assigned to forward the data is selected based on an absolute position of the source UE.

In an embodiment, in a case that the mobility indication information of the source UE indicates that the source UE has strong mobility, the relay UE assigned to forward the data is selected based on a relative position between the source UE and the relay UE.

In an embodiment, the relay UE assigned to forward the data is selected from at least one candidate relay UE in the vicinity of the source UE, at least based on a communication distance between the candidate relay UE and the source UE, a distance between adjacent relay UEs and/or a mobility of the candidate relay UE, where the source UE is UE for transmitting the relay request information.

In an embodiment, the multicast communication method further includes: transmitting the data to all candidate relay UEs in the vicinity of the source UE, in a case that a request for obtaining the data is received again within a time period after the data packet is transmitted.

To solve the above technical problem, a stateless multicast communication apparatus is further provided according to an embodiment of the present disclosure. The apparatus includes a first transmitting module, a receiving module, and a second transmitting module. The first transmitting module is configured to transmit relay request information in response to a demand for forwarding data, where the relay request information is used to request an assignment of a relay UE for forwarding the data. The receiving module is configured to receive relay response information, where the relay response information includes a relay ID of a relay UE assigned to forward the data. The second transmitting module is configured to transmit a data packet, where the data packet includes the data and the relay ID.

To solve the above technical problem, a stateless multicast communication method is further provided according to an embodiment of the present disclosure. The method includes: receiving a data packet, where the data packet includes data to be forwarded and a relay ID of a relay UE assigned to forward the data; and forwarding the data packet in a case that the relay ID in the data packet coincides with an owned relay ID.

In an embodiment, in the multicast communication method, the data packet is not forwarded, in a case that the relay ID in the data packet does not coincide with the owned relay ID.

In an embodiment, the forwarding the data packet in the case that the relay ID in the data packet coincides with an owned relay ID includes: determining whether to forward the data packet at least based on current service load and/or signal quality, in the case that the relay ID in the data packet coincides with the owned relay ID.

To solve the above technical problem, a stateless multicast communication apparatus is further provided according to an embodiment of the present disclosure. The apparatus includes a receiving module and a forwarding module. The receiving module is configured to receive a data packet, where the data packet includes data to be forwarded and a relay ID of a relay UE assigned to forward the data. The forwarding module is configured to forward the data packet in a case that the relay ID in the data packet coincides with an owned relay ID.

To solve the above technical problem, a stateless multicast communication method is further provided according to an embodiment of the present disclosure. The method includes: receiving relay request information, where the relay request information is used to request an assignment of a relay UE for forwarding data; selecting the relay UE for forwarding the data from at least one candidate relay UE, based on location information of a source UE for transmitting the relay request information and location information of the at least one candidate relay UE; and transmitting relay response information, where the relay response information includes a relay ID of a relay UE assigned to forward the data.

In an embodiment, the multicast communication method further includes: receiving capability report information, where the capability report information includes location information of UE for transmitting the capability report information, the UE is the source UE and/or the candidate relay UE.

In an embodiment, the relay request information includes mobility indication information of the source UE for transmitting the relay request information.

In an embodiment, the selecting a relay UE for forwarding the data from at least one candidate relay UE, based on location information of a source UE for transmitting the relay request information and location information of the at least one candidate relay UE includes: in a case that the mobility indication information of the source UE indicates that the source UE has weak mobility, selecting the relay UE for forwarding the data from the at least one candidate relay UE based on an absolute position of the source UE.

In an embodiment, the selecting a relay UE for forwarding the data from at least one candidate relay UE, based on location information of a source UE for transmitting the relay request information and location information of the at least one candidate relay UE includes: in a case that the mobility indication information of the source UE indicates that the source UE has strong mobility, selecting the relay UE for forwarding the data based on a relative position between the source UE and the at least one candidate relay UE.

In an embodiment, the selecting a relay UE for forwarding the data from at least one candidate relay UE, based on location information of a source UE for transmitting the relay request information and location information of the at least one candidate relay UE includes: selecting the relay UE for forwarding the data from the at least one candidate relay UE, at least based on a communication distance between the candidate relay UE and the source UE, a distance between adjacent candidate relay UEs and/or a mobility of the candidate relay UE, where the source UE is a UE for transmitting the relay request information.

To solve the above technical problem, a stateless multicast communication apparatus is further provided according to an embodiment of the present disclosure. The apparatus includes a receiving module, an assignation module and a transmitting module. The receiving module is configured to receive relay request information, where the relay request information is used to request an assignment of a relay UE for forwarding data. The assignation module is configured to select the relay UE for forwarding the data from at least one candidate relay UE based on location information of a source UE for transmitting the relay request information and location information of the at least one candidate relay UE. The transmitting module is configured to transmit relay response information, where the relay response information includes a relay ID of a relay UE assigned to forward the data.

To solve the above technical problem, a storage medium having a computer program stored thereon is further provided according to an embodiment of the present disclosure, where the computer program, when executed by a processor, performs the foregoing method.

To solve the above technical problem, a terminal is further provided according to an embodiment of the present disclosure. The terminal includes the foregoing stateless multicast communication apparatus; or a memory and a processor. A computer program is stored on the memory and is executable on the processor, where the processor performs the foregoing method when executing the computer program.

To solve the above technical problem, a base station is further provided according to an embodiment of the present disclosure. The base station includes the foregoing stateless multicast communication apparatus, or, a memory and a processor. A computer program is stored on the memory and is executable on the processor stored thereon, where the processor performs the foregoing method when executing the computer program.

Compared with the conventional technology, the technical solutions according to the embodiments of the present disclosure have the following advantageous effects.

For the source UE side, a stateless multicast communication method is provided according to an embodiment of the present disclosure. The method includes: transmitting relay request information in response to a demand for forwarding data, where the relay request information is used to request an assignment of a relay UE for forwarding the data; receiving relay response information, where the relay response information includes a relay ID of a relay UE assigned to forward the data; and transmitting a data packet, where the data packet includes the data and the relay ID.

In the stateless multicast communication scenario, compared with processing solution where the source UE blindly transmits the data to be forwarded to all surrounding relay UEs in the conventional technology, with the technical solutions of the present disclosure, the number of relay UEs for redundantly forwarding the data can be greatly reduced, thereby facilitating saving wireless resources. Specifically, when the source UE has data to be relayed, instead of blindly forwarding the data to be forwarded and expecting all surrounding relay UEs to forward the data in the processing solution according to the conventional technology, the source UE requests an assignment of an appropriate relay UE and then transmits data based on an assignment result. Further, the source UE performing the technical solutions of the present disclosure carries in the transmitted data packet the relay ID of the relay UE assigned to forward the data, enabling only the appropriate relay UE to forward the data of the source UE.

For the relay UE side, a stateless multicast communication method is further provided according to an embodiment of the present disclosure. The method includes: receiving a data packet, where the data packet includes data to be forwarded and a relay ID of a relay UE assigned to forward the data; and forwarding the data packet in a case that the relay ID in the data packet coincides with an owned relay ID.

In the stateless multicast communication scenario, in the conventional technology, the source UE blindly transmits the data to be forwarded to all surrounding relay UEs, and each relay UE that receives the data from the source UE is required to forward the data. In comparison, a relay UE according to the technical solutions of the present disclosure only forwards the received data in the case that the relay ID carried in the data packet transmitted by the source UE coincides with the owned relay ID, enabling to reduce the number of relay UEs redundantly forwarding the data. That is, when the source UE transmits a data packet carrying a relay ID of a particular relay UE to all surrounding relay UEs according to the technical solutions of the present disclosure, not all relay UEs which receive the data packet forward the data, thereby reducing the number of relay UEs for forwarding the data to save wireless resources.

For the network side, a stateless multicast communication method is further provided according to an embodiment of the present disclosure. The method includes: receiving relay request information, where the relay request information is used to request an assignment of a relay UE for forwarding data; selecting the relay UE for forwarding the data from at least one candidate relay UE, based on location information of a source UE for transmitting the relay request information and location information of the at least one candidate relay UE; and transmitting relay response information, where the relay response information includes a relay ID of a relay UE assigned to forward the data.

The network side is not involved in the conventional stateless multicast communication process, and the multicast communication is performed by cooperation of the source UE and the relay UE. There exists a problem that a large number of relay UEs redundantly forwarding the data causes a waste of wireless resources. Instead, a network-assisted stateless multicast communication method is provided according to the technical solutions of the present disclosure, in which one or more appropriate relay UEs are assigned by the network for a forwarding demand of the source UE based on the location information of the source UE and the candidate relay UEs, enabling only the appropriate relay UEs to forward the data of the source UE.

### BRIEF DESCRIPTION OF THE DRAWINGS

Figure 1 is a flow chart of a stateless multicast communication method according to a first embodiment of the present disclosure;
Figure 2 is a schematic structural diagram of a stateless multicast communication apparatus according to a first embodiment of the present disclosure;
Figure 3 is a flow chart of a stateless multicast communication method according to a second embodiment of the present disclosure;
Figure 4 is a schematic structural diagram of a stateless multicast communication apparatus according to a second embodiment of the present disclosure;
Figure 5 is a flow chart of a stateless multicast communication method according to a third embodiment of the present disclosure; and
Figure 6 is a schematic structural diagram of a stateless multicast communication apparatus according to a third embodiment of the present disclosure.

### DETAILED DESCRIPTION OF EMBODIMENTS

As mentioned in the background art, a large amount of redundant forwarding in the conventional stateless multicast communication process results in a great waste of wireless resources.

Specifically, in multicast communication (i.e. point-to-multipoint group communication), group members UE A and UE B are required to relay service data via other relay UEs to implement direct communication, due to a long distance between the group members. Depending on the distance, one or more relay UEs may be required to relay the service data to implement the direct communication successfully. The direct communication that may be achieved by relaying the service data through only one relay UE is referred to as single-hop relay communication. The direct communication that may be achieved by relaying the service data through more than one relay UE is referred to as multi-hop relay communication. In consideration of the complexity of the multi-hop relay communication, technical solutions of the present disclosure mainly focus on the single-hop relay communication.

In multicast communication, in the conventional stateless data packet relaying mode, all relay UEs located in the vicinity of the source UE forward a data packet from the source UE, which causes a large amount of redundant forwarding, resulting in a waste of wireless resources.

For example, it is assumed that UE1 is the source UE whose data is requested in multicast communication. UE1 only knows that UE requests its data in the network, but is unaware of which target UEs requests the data. In the stateless single-hop relaying of a data packet in conventional multicast communication, UE1 transmits its data packet directly to all surrounding relay UEs, and as long as the relay UEs are configured to statelessly forward data packet, the relay UEs forward the data packet of UE1 after receiving the data packet of UE1. After one hop relaying, one or more target UEs, which are within communication range and are interested in the data packet service of UE1, receive the data packet forwarded by the relay UEs.

In fact, however, when several relay UEs in the vicinity of the source UE are closed, not all of the closed relay UEs are actually required to perform a forwarding operation. All relay UEs forward the data packet from the source UE, inevitably resulting in a waste of resources.

In summary, in the statelessly relaying data packet process in conventional multicast communication, the source UE transmits its own data packet directly to all surrounding relay UEs. As long as the relay UE is configured to statelessly forward the data packet, the relay UE forwards the data packet of the source UE after receiving the data packet. Such a communication manner obviously causes a large amount of redundant forwarding, resulting in a waste of wireless resources.

Therefore, there is an urgent need to provide a more efficient communication manner such that only an appropriate relay UE forwards the data packet of the source UE.

To solve the above technical problem, a stateless multicast communication method is provided according to an embodiment of the present disclosure. The method includes: transmitting relay request information in response to a demand for forwarding data, where the relay request information is used to request an assignment of a relay UE for forwarding the data; receiving relay response information, where the relay response information includes a relay ID of a relay UE assigned to forward the data; and transmitting a data packet, where the data packet includes the data and the relay ID.

In the stateless multicast communication scenario, compared with processing solution where the source UE blindly transmits the data to be forwarded to all surrounding relay UEs in the conventional technology, with the technical solutions of the present disclosure, the number of relay UEs for redundantly forwarding the data can be greatly reduced, thereby facilitating saving wireless resources. Specifically, when the source UE has data to be relayed, instead of blindly forwarding the data to be forwarded and expecting all surrounding relay UEs to forward the data in the processing solution according to the conventional technology, the source UE requests an assignment of an appropriate relay UE and then transmits data based on an assignment result. Further, the source UE performing the technical solutions of the present disclosure carries in the transmitted data packet the relay ID of the relay UE assigned to forward the data, enabling only the appropriate relay UE to forward the data of the source UE.

In order to make the above objects, features and advantageous effects of the present disclosure more obvious and understandable, specific embodiments of the present disclosure are described in detail below in conjunction with the accompanying drawings.

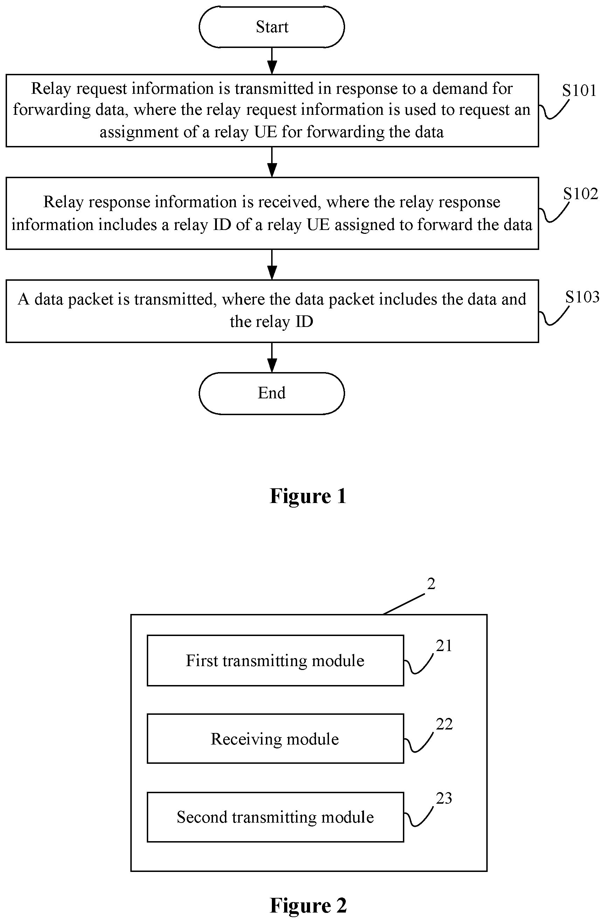

Figure 1 is a flow chart of a stateless multicast communication method according to a first embodiment of the present disclosure.

The technical solutions of the embodiment may be applied to a stateless multicast communication scenario. That is, in the point-to-multipoint multicast communication scenario described in the embodiment, a source UE transmits data via a relay UE, and the data forwarded by the relay UE is directed to one or more unspecified target UEs.

The technical solutions of the embodiment may be performed on a user equipment side, specifically on a source UE in the multicast communication scenario. The source UE is defined with respect to the relay UE and the target UE, which is configured to transmit data. The transmitted data is forwarded to the target UE via the relay UE. In the stateless multicast communication scenario described in the present embodiment, the source UE is unaware of specific information about the target UE.

The relay UE described in the present embodiment is configured to statelessly forward a data packet.

In a specific implementation, the stateless multicast communication method provided in steps S101 to S103 below may be performed by a chip with multicast communication function in user equipment, or by a baseband chip in the user equipment.

Specifically, referring to Figure 1, the stateless multicast communication method according to the present embodiment may include steps S101 to S103.

In step S101, relay request information is transmitted in response to a demand for forwarding data, where the relay request information is used to request an assignment of a relay UE for forwarding the data.

In step S102, relay response information is received, where the relay response information includes a relay ID of a relay UE assigned to forward the data.

In step S103, a data packet is transmitted, where the data packet includes the data and the relay ID.

In a specific implementation, the demand for forwarding data may be generated after a request from a network or an application layer is received.

For example, UE in proximity of the source UE reports the required data to the network, and the network trigger the data transmission of the source UE.

For another example, the demand for forwarding data may be triggered based on a specific application.

In a specific implementation, the relay request information may include mobility indication information of the source UE for transmitting the relay request information.

Specifically, the mobility indication information is used to indicate strength grade of mobility of the UE.

For example, when the UE is substantially located in the same cell in a period of time, the UE may be determined to have weak mobility.

For another example, when the UE moves frequently among multiple cells, the UE may be determined to have strong mobility.

Further, the source UE may generate the mobility indication information based on a condition of the source UE and report the mobility indication information to a base station via the relay request information.

In a variation example, the relay request information may not include the mobility indication information of the source UE. In this case, the base station for receiving the relay request information determines the mobility indication information of the source UE by tracking the location information of the source UE.

In a specific implementation, when the mobility indication information of the source UE indicates that the source UE has weak mobility, the relay UE assigned to forward the data may be selected based on an absolute position of the source UE. That is, when the source UE has weak mobility, an appropriate relay UE may be found in the vicinity of the source UE based on the location information of the source UE.

In a specific implementation, when the mobility indication information of the source UE indicates that the source UE has strong mobility, the relay UE assigned to forward the data may be selected based on a relative position between the source UE and the relay UE. That is, when the source UE has strong mobility, an appropriate relay UE may be found based on the relative position between the source UE and the candidate relay UE.

In a specific implementation, the relay UE assigned to forward the data may be selected from at least one candidate relay UE located in the vicinity of the source UE, at least based on a communication distance between the candidate relay UE and the source UE, a distance between adjacent relay UEs and/or the mobility of the candidate relay UE.

Specifically, based on the communication distance between the candidate relay UE and the source UE, a candidate relay UE within an optimal distance range of the source UE may be selected as the relay UE assigned to forward the data.

Further, in combination with the distance between adjacent relay UEs, it is ensured that the number of relay UEs assigned to forward the data is as small as possible, and the coverage of the relay UEs assigned to forward the data is as wide as possible. For example, if two candidate relay UEs are located close to each other, only one of the candidate relay UEs may be selected to forward the data.

Further, the mobility of the candidate relay UEs may also be used as one of selection criteria. For example, a candidate relay UE with weak mobility may be preferred as the relay UE assigned to forward the data. The mobility of the candidate relay UE may be obtained based on capacity reporting information reported by the candidate relay UE.

In a specific implementation, the number of relay UE assigned to forward the data may be one or more. Accordingly, the number of relay ID indicated in the relay response information may be one or more.

In a specific implementation, the relay ID of the relay UE may be an Identification (abbreviated as ID) of the relay UE. The ID may be used to uniquely identify the UE. For example, the relay ID of the relay UE may be an International Mobile Subscriber Identity (abbreviated as IMSI) of the relay UE, and may also be a Serving-Temporary Mobile Subscriber Identity (abbreviated as S-TMSI) of the relay UE.

In a specific embodiment, after the step S103, the multicast communication method according to the embodiment may further include: transmitting the data to all candidate relay UEs in the vicinity of the source UE, in a case that a request for obtaining the data is received again within a time period after the data packet is transmitted.

In an embodiment, the source UE may transmit the data again in the case that the source UE receives a request to transmit the same data from a network or an application layer again within the time period after the step S103.

Further, when the source UE transmits the data again, a forwarding method without assistance of the network according to the embodiment may be used. That is, the source UE transmits the data to all surrounding relay UEs. Accordingly, all surrounding relay UEs forward the data after receiving the data from the source UE.

On the basis of the above technical solutions, at the source UE side, with the technical solutions of the present disclosure, the number of relay UEs redundantly forwarding the data can be significantly reduced, thereby facilitating saving wireless resources. Specifically, when the source UE has data to be relayed, instead of blindly forwarding the data to be forwarded and expecting all surrounding relay UEs to forward the data as in the processing solutions in the conventional technology, the source UE requests an assignment of an appropriate relay UE and then transmits the data based on the assignment result. Further, the source UE performing the technical solutions of the present disclosure carries the relay ID of the relay UE assigned to forward the data in the transmitted data packet, enabling only the appropriate relay UE to forward the data of the source UE.

Figure 2 is a schematic structural diagram of a stateless multicast communication apparatus according to a first embodiment of the present disclosure. Those skilled in the art will understand that the stateless multicast communication apparatus 2 according to the present embodiment may be used to implement the technical solutions of the foregoing method according to the embodiments described in Figure 1.

Specifically, referring to Figure 2, the stateless multicast communication apparatus 2 according to the present embodiment may include a first transmitting module 21, a receiving module 22 and a second transmitting module 23. The first transmitting module 21 is configured to transmit relay request information in response to a demand for forwarding data, where the relay request information is used to request an assignment of a relay UE for forwarding the data. The receiving module 22 is configured to receive relay response information, where the relay response information includes a relay ID of a relay UE assigned to forward the data. The second transmitting module 23 is configured to transmit a data packet, where the data packet includes the data and the relay ID.

More contents about an operating principle and an operating mode of the stateless multicast communication apparatus 2 may be referred to the relevant description in Figure 1 above, which will not be repeated herein.

In a specific implementation, the above stateless multicast communication apparatus 2 may correspond to a chip with multicast communication function or to a chip with data processing function in user equipment, such as a System-on-a-Chip (abbreviated as SOC) and a baseband chip; or to a chip module including a chip with multicast communication function or to a chip module including a chip with data processing function in user equipment; or to user equipment.

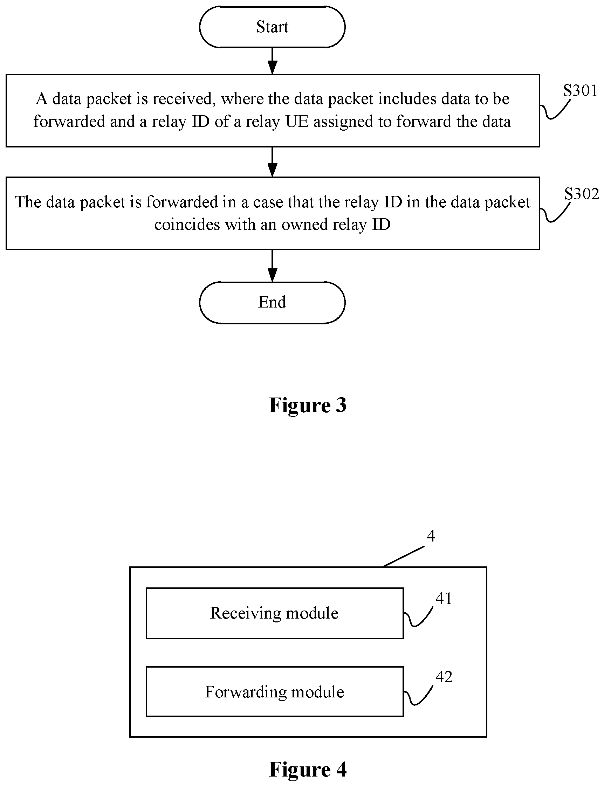

Figure 3 is a flow chart of a stateless multicast communication method according to a second embodiment of the present disclosure.

The technical solutions of the embodiment may be applied to a stateless multicast communication scenario. That is, in the point-to-multipoint group communication scenario according to the embodiment, a source UE transmits data via a relay UE, and the data forwarded by the relay UE is directed to one or more unspecified target UEs.

The technical solutions of the embodiment may be performed on a user equipment side, e.g. on a relay UE at the user equipment side. Further, the relay UE is configured as a relay UE for statelessly forwarding a data packet.

In a specific implementation, a stateless multicast communication method provided in steps S301 to S302 below may be performed by a chip with multicast communication function in user equipment, or by a baseband chip in the user equipment.

Specifically, referring to Figure 3, the stateless multicast communication method according to the embodiment may include steps S301 to S302.

In step S301, a data packet is received, where the data packet includes data to be forwarded and a relay ID of a relay UE assigned to forward the data.

In step S302, the data packet is forwarded in a case that the relay ID in the data packet coincides with an owned relay ID.

The explanation of the terms involved in the embodiment may be referred to the relevant description of the embodiment shown in Figure 1, which will not be repeated herein.

Further, after the source UE performs step S103 in Figure 1 above to transmit a data packet carrying a relay ID of a relay UE assigned to forward the data, any relay UE in the vicinity of the source UE may perform the steps according to the embodiment. For example, the relay UE may perform the step S301 to receive the data packet transmitted by the source UE and to obtain a relay ID list carried in the data packet. Further, after obtaining the relay ID list, the relay UE traverses the relay ID list to determine whether the owned relay ID is recorded in the relay ID list. If the owned relay ID is found in the relay ID list, it is determined that the relay UE is assigned to forward the data received this time. If the owned relay ID is not found in the relay ID list, it is determined that the relay UE is not assigned to forward the data.

In a specific implementation, after receiving the data packet in the step S301, the relay UE may not forward the data packet in the case that the relay ID in the data packet does not coincide with the owned relay ID.

In a specific embodiment, in the step S302, if it is determined that the relay ID in the data packet coincides with the owned relay ID, it may be determined whether to forward the data packet, at least based on current service load and/or signal quality.

That is, the relay UE, which is assigned by the network to forward the data from the source UE, may determine whether to actually forward the data packet based on their own situation.

For example, if the relay UE is determined that the owned relay ID exists in the data packet transmitted by the source UE by the comparison. However, the relay UE currently has a high service load, the relay UE may select to not forward the data packet.

Further, even if the relay UE selects to not forward the data packet, the relay UE may not inform the source UE of a processing result thereof, to avoid additional signaling overhead.

Further, if all relay UEs assigned to forward the data select to not forward the data packet of the source UE based on their situations, the source UE may transmit the owned data packet again when receiving a request from the network or the application layer again. In this case, the source UE may use a forwarding method without assistance of the network. That is, the source UE transmits the data packet to all surrounding relay UEs, and each relay UE that receives the data packet is required to forward the data packet.

On the basis of the above technical solutions, at the relay UE side, the relay UE according to the technical solutions of the present disclosure only forwards the received data in the case that a relay ID carried in the data packet transmitted by the source UE coincides with the owned relay ID, enabling to reduce the number of relay UEs redundantly forwarding the data packet. That is, when the source UE transmits a data packet carrying a relay ID of a particular relay UE to all surrounding relay UEs according to the technical solutions of the present disclosure, not all relay UEs that receive the data packet forward the data, thereby reducing the number of relay UEs for forwarding and saving wireless resources.

Figure 4 is a schematic structural diagram of a stateless multicast communication apparatus according to a second embodiment of the present disclosure. Those skilled in the art understands that the stateless multicast communication apparatus 4 according to the embodiment may be used to implement the technical solutions of the foregoing method described in the embodiment described in Figure 3.

Specifically, referring to Figure 4, the stateless multicast communication apparatus 4 according to the embodiment may include a receiving module 41 and a forwarding module 42. The receiving module 41 is configured to receive a data packet, where the data packet includes data to be forwarded and a relay ID of a relay UE assigned to forward the data. The forwarding module 42 is configured to forward the data packet in a case that the relay ID in the data packet coincides with the owned relay ID.

More contents about an operating principle and an operating mode of the stateless multicast communication apparatus 4 may be referred to the relevant description in Figure 3 above, which will not be repeated herein.

In a specific implementation, the above stateless multicast communication apparatus 4 may correspond to a chip with multicast communication function or to a chip with data processing function in user equipment, such as a System-on-a-Chip (SOC) and a baseband chip; or to a chip module including a chip with multicast communication function or to a chip module including a chip with a data processing function in user equipment, or to user equipment.

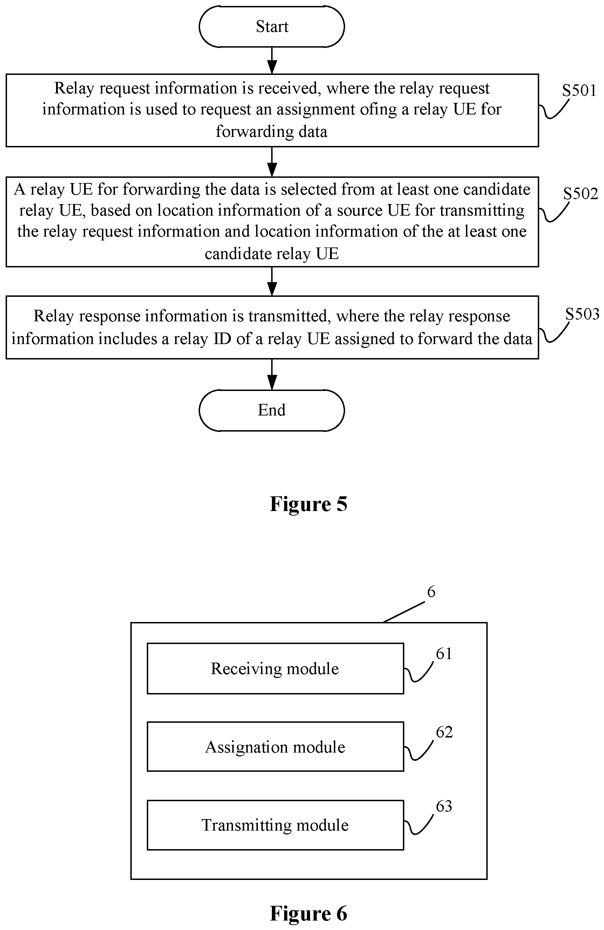

Figure 5 is a flowchart of a stateless multicast communication method according to a third embodiment of the present disclosure.

The technical solutions of the embodiment may be applied to a stateless multicast communication scenario. That is, in the point-to-multipoint group communication scenario described in the embodiment, the source UE transmits data via a relay UE, and the data forwarded by the relay UE is directed to one or more unspecified target UEs.

The technical solutions of the embodiment may be performed at a network side, e.g. by a base station at the network side.

In a specific implementation, the stateless multicast communication method provided in steps S501 to S503 below may be performed by a chip with multicast communication function in a network device, or by a baseband chip in the network device.

Specifically, referring to Figure 5, the stateless multicast communication method according to the embodiment may include steps S501 to 503.

In step S501, relay request information is received, where the relay request information is used to request an assignment of a relay UE for forwarding data.

In step S502, a relay UE for forwarding the data is selected from at least one candidate relay UE, based on location information of a source UE for transmitting the relay request information and location information of the at least one candidate relay UE.

In step S503, relay response information is transmitted, where the relay response information includes a relay ID of a relay UE assigned to forward the data.

It is understandable by those skilled in the art that the steps S501 to step S503 may be considered as execution steps corresponding to steps S101 to step S 103 described in the embodiment shown in Figure 1 above, which are complementary in their specific implementation principles and logic. Thus, the explanations of the terms involved in the embodiment may be referred to the relevant description of the embodiment shown in Figure 1, which will not be repeated herein.

In a specific implementation, prior to the step S501, the multicast communication method according to the embodiment may further include: receiving capability reporting information, where the capability reporting information includes location information of a UE for transmitting the capability reporting information, and the UE is the source UE and/or a candidate relay UE.

Specifically, a base station performing the technical solutions of the present disclosure may track the location information of all UEs within a coverage range; and select an appropriate relay UE to forward data for the source UE based on the location information of the source UE and the candidate relay UEs located in the vicinity of the source UE, upon receiving relay request information from any source UE within the coverage range.

For example, the UE may proactively transmit the capability reporting information to the base station to report its location information. The base station may configure the UE with a reporting condition to cause the UE to transmit the capability reporting information in the case that the reporting condition is triggered. The reporting condition may be at initial access to a cell, the capacity being updated and/or periodic reporting.

For another example, the base station may trigger the UE to report its location information as required.

Further, the capability reporting information may further include mobility indication information of the UE. For example, the capability reporting information reported by the relay UE may include location information and mobility indication information of the relay UE. The mobility indication information of the source UE may be reported when the relay request information is transmitted, or may be reported in the capability reporting information transmitted usually.

In a specific implementation, the step S502 may include: selecting a relay UE for forwarding the data from the at least one candidate relay UE based on an absolute position of the source UE, in a case that the mobility indication information for the source UE indicates that the source UE has weak mobility.

Further, the relay UE for forwarding the data may be selected from the at least one candidate relay UE, at least based on a communication distance between the candidate relay UE and the source UE, a distance between adjacent candidate relay UEs and/or the mobility of the candidate relay UE.

For example, using latitude and longitude coordinates of the source UE as an origin, candidate relay UEs within a predetermined radius around the source UE are searched for as the relay UEs assigned to forward the data. Further, for the candidate relay UEs falling within the range, a candidate relay UE with weak mobility may be preferably selected as the relay UE assigned to forward the data. Further, if two adjacent candidate relay UEs are close, only one of the candidate relay UEs may be selected as the relay UE assigned to forward the data.

In a specific implementation, the step S502 may include: selecting a relay UE for forwarding the data based on a relative position between the source UE and at least one candidate relay UE, in a case that the mobility indication information of the source UE indicates that the source UE has strong mobility.

Further, the relay UE for forwarding the data may be selected from the at least one candidate relay UE, at least based on a communication distance between the candidate relay UE and the source UE, a distance between adjacent candidate relay UEs and/or the mobility of the candidate relay UE.

For example, a reference coordinate system is constructed by taking the position of the source UE as a reference, the positions of the candidate relay UEs within the coverage range of the base station are mapped into the reference coordinate system. Then, a candidate relay UE located within a predetermined radius around the source UE is searched for in the reference coordinate system as the relay UE assigned to forward the data. Further, for the candidate relay UE falling within the range, the candidate relay UEs with weak mobility may be preferably selected as the relay UE assigned to forward the data. Further, if two adjacent candidate relay UEs are close, only one of the candidate relay UEs may be selected as the relay UE assigned to forward the data.

On the basis of the above technical solutions, for the network side, a network-assisted stateless multicast communication method is provided according to the technical solutions of the embodiment. The network assigns one or more appropriate relay UEs for a forwarding demand of the source UE, based on the location information of the source UE and the candidate relay UEs, enabling only the appropriate relay UEs to forward the data of the source UE.

Figure 6 is a schematic structural diagram of a stateless multicast communication apparatus according to a third embodiment of the present disclosure. Those skilled in the art understands that the stateless multicast communication apparatus 6 according to the embodiment may be used to implement the technical solution of the foregoing method described in the embodiment described in Figure 5.

Specifically, referring to Figure 6, the stateless multicast communication apparatus 6 according to the embodiment may include a receiving module 61, an assignation module 62 and a transmitting module 63. The receiving module 61 is configured to receive relay request information, where the relay request information is used to request an assignment of a relay UE for forwarding data. The assignation module 62 is configured to select the relay UE for forwarding the data from at least one candidate relay UE based on location information of a source UE for transmitting the relay request information and location information of the at least one candidate relay UE. The transmitting module 63 is configured to transmit relay response information, where the relay response information includes a relay ID of a relay UE assigned to forward the data.

More contents about an operating principle and an operating mode of the stateless multicast communication apparatus 6 may be referred to the relevant description in Figure 5 above, which will not be repeated herein.

In a specific implementation, the above stateless multicast communication apparatus 6 may correspond to a chip with multicast communication function or to a chip with data processing function in a network device, such as a System-on-a-Chip (SOC) and a baseband chip; or to a chip module including a chip with multicast communication function or to a chip module including a chip with data processing function in a network device; or to a network device.

In implementation, modules/units included in the apparatuses and the products described in the above embodiments may be software modules/units, hardware modules/units, or a combination thereof.

For example, for the apparatuses or the products applied to or integrated in a chip, modules/units included therein may be implemented by hardware such as circuits. Alternatively, at least part of the modules/units may be implemented by a software program executed on the processor integrated inside the chip, and the remaining (if any) part of the modules/units may be implemented by hardware such as circuits. For the apparatuses or the products applied to or integrated in a chip module, modules/units included therein may be implemented by hardware such as circuits, and different modules/units may reside in the same component (such as a chip and a circuit module) or in different components of the chip module. Alternatively, at least part of the modules/units may be implemented by software programs executed on the processor integrated inside the chip module, and the remaining (if any) part of the modules/units may be implemented by hardware such as circuits. For the apparatus or the products applied to or integrated in a terminal, all of modules/units included therein may be implemented in hardware such as circuits, and different modules/units may reside in the same component (such as a chip and a circuit module) or in different components in the terminal. Alternatively, at least part of the modules/units may be implemented by software programs executed on the processor integrated inside the terminal, and the remaining (if any) part of the modules/units may be implemented in hardware such as circuits.

In a typical application scenario, the base station may track the location of all UEs within the coverage range either periodically or in real time.

If a source UE located within the coverage range of the base station has a data packet to be forwarded, the source UE may transmit the relay request information to the base station. The relay request information includes the mobility indication information of the source UE.

Further, upon receiving the relay request information, the base station may select an appropriate relay UE from at least one candidate relay UE based on an absolute position of the source UE, in the case that the mobility indication information of the source UE indicates that the source UE has weak mobility; and the base station may select a relay UE based on a relative position between the source UE and the candidate relay UE, in the case that the mobility indication information of the source UE indicates that the source UE has strong mobility.

The selection criteria include, but are not limited to: 1. selecting a candidate relay UE within an optimal communication range of the source UE; 2. selecting only one relay UE to forward the data from two candidate relay UEs located close to each other; and 3. selecting a candidate relay UE with weak mobility.

Further, after selecting the relay UE, the base station may transmit the relay response information to the source UE, where the relay response information includes a relay ID of a relay UE assigned to forward the data.

Further, the source UE receives the relay response information to obtain the relay ID in the relay response information and carries the relay ID in the data packet to be transmitted.

Further, after receiving the data packet, a relay UE in the vicinity of the source UE determines whether the relay ID in the data packet coincides with the relay ID of the relay UE. Only the relay UE that has the relay ID coinciding with the relay ID in the data packet forwards the data packet, and the relay UE that has the relay ID not coinciding with the relay ID in the data packet does not forward the data packet.

In a variant example, a relay UE in the vicinity of the source UE receives the data packet, and even if the relay UE determines that the relay ID thereof coincides with the relay ID in the data packet, the relay UE may not forward the data packet based on its own situation (e.g. service load, signal quality, or the like).

Further, if all relay UEs in the vicinity of the source UE do not forward the data packet from the source UE, the source UE may transmit the data packet again when receiving a request from the network or the application layer again. In this case, the source UE may use a forwarding method without assistance of the network. That is, the source UE transmits a data packet directly and the data packet do not contain a relay ID, and all surrounding relay UEs forward the data packet from the source UE.

On the basis of the above technical solutions, with the technical solutions of the embodiment, the number of relay UEs redundantly forwarding the data packet from the source UE can be greatly reduced, thereby saving wireless resources.

Further, a storage medium having a computer program stored thereon is further provided according to an embodiment of the present disclosure. The computer program, when executed by a processor, performs the technical solutions of the foregoing method described in the embodiment shown in Figures 1, 3 or 5. Preferably, the storage medium may include a computer readable storage medium such as non-volatile memory or non-transitory memory. The storage medium may include ROM, RAM, disk or CD-ROM, or the like.

Further, a terminal including a memory and a processor is further provided according to an embodiment of the present disclosure. A computer program executable on the processor is stored on the memory. The processor, when executing the computer program, performs technical solutions of the foregoing method described in the embodiment shown in Figure 1. Specifically, the terminal may be UE, such as a source UE in a stateless multicast communication scenario. Alternatively, the terminal includes the foregoing stateless multicast communication apparatus 2 as shown in Figure 2.

Further, a terminal including a memory and a processor is further provided according to an embodiment of the present disclosure. A computer program executable on the processor is stored on the memory. The processor, when executing the computer program, performs technical solutions of the foregoing method described in the embodiment shown in Figure 3. Specifically, the terminal may be UE, such as a source UE in a stateless multicast communication scenario. Alternatively, the terminal includes the foregoing stateless multicast communication apparatus 4 as shown in Figure 4.

Further, a base station including a memory and a processor is further provided according to an embodiment of the present disclosure. A computer program executable on the processor is stored on the memory. The processor, when executing the computer program, performs the technical solutions of the foregoing method described in the embodiment shown in Figure 5. Specifically, the base station may be a base station in a stateless multicast communication scenario. Alternatively, the base station includes the foregoing stateless multicast communication apparatus 6 as shown in Figure 6.

The technical solutions of the present disclosure may be applicable to 5G (5 generation) communication systems, and may also be applicable to various communication systems of subsequent evolution, such as 6G and 7G.

The technical solutions of the present disclosure are also applicable to different network architectures, which includes but not limited to relay network architectures, dual link architectures, Vehicle-to-Everything (communication from vehicle to any object) architectures.

A base station (abbreviated as BS) in the embodiments of the present disclosure, which may also be referred to as a base station device, which is deployed in a wireless access network to provide wireless communication functions. For example, in a 2G network, a device providing the base station function includes a base transceiver station (abbreviated as BTS) and a base station controller (abbreviated as BSC). In a 3G network, the device providing the base station function includes a node B (NodeB) and a radio network controller (abbreviated as RNC). In a 4G network, the device providing the base station function includes an evolved Node B (abbreviated as eNB). In wireless local area networks (WLAN), the device providing the base station function is an access point (abbreviated as AP). In 5G New Radio (abbreviated as NR), the device providing the base station function includes a continued evolved node B (gNB). The device providing the base station function may include a device providing the wireless communication function in a future new communication system.

Terminals in the embodiments of the present disclosure may refer to various forms of user equipment (UE), access terminals, subscriber units, user stations, mobile sites, mobile stations (MS), remote stations, remote terminals, mobile devices, user terminals, terminal equipment, wireless communication devices, user agent or user devices. The terminal equipment may also be a cellular telephone, cordless telephone, Session Initiation Protocol (SIP) telephone, Wireless Local Loop (WLL) station, Personal Digital Assistant (PDA), handheld device with wireless communication functions, computing device or other processing device, in-vehicle devices and wearable devices connected to a wireless modem, terminal devices in future 5G networks or in future evolved Public Land Mobile Networks (PLMNs), or the like, which are not limited by embodiments of the present disclosure.

It should be understood that the term "and/or" in the present disclosure simply describes an association relationship between associated objects, which indicates including three kinds of relationships. For example, A and/or B indicates three cases: A alone, A and B together, and B alone. In addition, the character "/" in the present disclosure indicates the "or" relationship.

The term "multiple" in the embodiments of the present disclosure refers to two or more.

The descriptions such as the first and the second in the embodiments of the present disclosure are used to illustrate and distinguish the description objects, which do not indicate the order, and do not indicate the special limitation on the number of devices in the embodiments of the present disclosure, and do not constitute any limitation on the embodiments in the present disclosure.

The term "connection" in the embodiments of the present disclosure refers to various connection methods, such as direct connection or indirect connection used to achieve communication between devices, which is not limited herein.

The terms "network" and "system" in the embodiments of the present disclosure express the same concept, and a communication system is a communication network.

Although the present disclosure is disclosed as above, the technical solutions are not limited thereto. Various changes and modifications may be made by those skilled in the art without departing from the spirit and scope of the present disclosure. Therefore, the protection scope of the present disclosure should be based on the scope defined by the claims.

## Claims

1. A stateless multicast communication method, comprising:
transmitting relay request information in response to a demand for forwarding data, wherein the relay request information is used to request an assignment of a relay UE for forwarding the data;
receiving relay response information, wherein the relay response information comprises a relay ID of a relay UE assigned to forward the data; and
transmitting a data packet, wherein the data packet comprises the data and the relay ID.

2. The multicast communication method according to claim 1, wherein the relay request information comprises mobility indication information of a source UE for transmitting the relay request information.

3. The multicast communication method according to claim 2, wherein in a case that the mobility indication information of the source UE indicates that the source UE has weak mobility, the relay UE assigned to forward the data is selected based on an absolute position of the source UE.

4. The multicast communication method according to claim 2, wherein in a case that the mobility indication information of the source UE indicates that the source UE has strong mobility, the relay UE assigned to forward the data is selected based on a relative position between the source UE and the relay UE.

5. The multicast communication method according to any one of claims 1 to 4, wherein the relay UE assigned to forward the data is selected from at least one candidate relay UE in the vicinity of the source UE, at least based on a communication distance between the candidate relay UE and the source UE, a distance between adjacent relay UEs and/or a mobility of the candidate relay UE, wherein the source UE is UE for transmitting the relay request information.

6. The multicast communication method according to any one of claims 1 to 4, further comprising:
transmitting the data to all candidate relay UEs in the vicinity of the source UE, in a case that a request for obtaining the data is received again within a time period after the data packet is transmitted.

7. A stateless multicast communication apparatus, comprising:
a first transmitting module configured to transmit relay request information in response to a demand for forwarding data, wherein the relay request information is used to request an assignment of a relay UE for forwarding the data;
a receiving module configured to receive relay response information, wherein the relay response information comprises a relay ID of a relay UE assigned to forward the data; and
a second transmitting module configured to transmit a data packet, wherein the data packet comprises the data and the relay ID.

8. A stateless multicast communication method, comprising:
receiving a data packet, wherein the data packet comprises data to be forwarded and a relay ID of a relay UE assigned to forward the data; and
forwarding the data packet in a case that the relay ID in the data packet coincides with an owned relay ID.

9. The multicast communication method according to claim 8, wherein
the data packet is not forwarded in a case that the relay ID in the data packet does not coincide with the owned relay ID.

10. The multicast communication method according to claim 8, wherein the forwarding the data packet in a case that the relay ID in the data packet coincides with an owned relay ID comprises:
determining whether to forward the data packet at least based on current service load and/or signal quality, in a case that the relay ID in the data packet coincides with the owned relay ID.

11. A stateless multicast communication apparatus, comprising:
a receiving module configured to receive a data packet, wherein the data packet comprises data to be forwarded and a relay ID of a relay UE assigned to forward the data; and
a forwarding module configured to forward the data packet in a case that the relay ID in the data packet coincides with an owned relay ID.

12. A stateless multicast communication method, comprising:
receiving relay request information, wherein the relay request information is used to request an assignment of a relay UE for forwarding data;
selecting the relay UE for forwarding the data from at least one candidate relay UE, based on location information of a source UE for transmitting the relay request information and location information of the at least one candidate relay UE; and
transmitting relay response information, wherein the relay response information comprises a relay ID of a relay UE assigned to forward the data.

13. The multicast communication method according to claim 12, further comprising:
receiving capability report information, wherein the capability report information comprises location information of UE for transmitting the capability report information, and the UE is the source UE and/or the candidate relay UE.

14. The multicast communication method according to claim 12, wherein the relay request information comprises mobility indication information of the source UE for transmitting the relay request information.

15. The multicast communication method according to claim 14, wherein the selecting a relay UE for forwarding the data from at least one candidate relay UE, based on location information of a source UE for transmitting the relay request information and location information of the at least one candidate relay UE comprises:
in a case that the mobility indication information of the source UE indicates that the source UE has weak mobility, selecting the relay UE for forwarding the data from the at least one candidate relay UE based on an absolute position of the source UE.

16. The multicast communication method according to claim 14, wherein the selecting a relay UE for forwarding the data from at least one candidate relay UE, based on location information of a source UE for transmitting the relay request information and location information of the at least one candidate relay UE comprises:
in a case that the mobility indication information of the source UE indicates that the source UE has strong mobility, selecting the relay UE for forwarding the data based on a relative position between the source UE and the at least one candidate relay UE.

17. The multicast communication method according to any one of claims 12 to 16, wherein the selecting a relay UE for forwarding the data from at least one candidate relay UE, based on location information of a source UE for transmitting the relay request information and location information of the at least one candidate relay UE comprises:
selecting the relay UE for forwarding the data from the at least one candidate relay UE, at least based on a communication distance between the candidate relay UE and the source UE, a distance between adjacent candidate relay UEs and/or a mobility of the candidate relay UE, wherein the source UE is UE for transmitting the relay request information.

18. A stateless multicast communication apparatus, comprising:
a receiving module configured to receive relay request information, wherein the relay request information is used to request an assignment of a relay UE for forwarding data;
an assignation module configured to select the relay UE for forwarding the data from at least one candidate relay UE based on location information of a source UE for transmitting the relay request information and location information of the at least one candidate relay UE; and
a transmitting module configured to transmit relay response information, wherein the relay response information comprises a relay ID of a relay UE assigned to forward the data.

19. A storage medium having a computer program stored thereon, wherein the computer program, when executed by a processor, performs steps of the method according to any one of claims 1 to 6, 8 to 10 and 12 to 17.

20. A terminal, comprising:
the stateless multicast communication apparatus according to claim 7 or 11, or,
a memory and a processor, wherein a computer program executable on the processor is stored on the memory, wherein the processor performs the method according to any one of claims 1 to 6, and 8 to 10 when executing the computer program.

21. A base station, comprising:
the stateless multicast communication apparatus according to claim 18, or,
a memory and a processor, wherein a computer program executable on the processor is stored on the memory, wherein the processor performs the method according to any one of claims 12 to 17 when executing the computer program.
